# EUROPÄISCHE PATENTANMELDUNG

(11) **EP 2 607 895 A1**
(43) Veröffentlichungstag der Anmeldung: **26.06.2013**
(21) Anmeldenummer: 11194909.5
(22) Anmeldetag: 21.12.2011
(51) Int. Cl.: G01N 29/26, G01S 7/00, G10K 11/34

(54) **Phased-Array Scans mit wählbarer Auflösung**

(71) Anmelder: Siemens Aktiengesellschaft, 80333 München (DE)
(72) Erfinder: Clossen-von Lanken Schulz, Michael, 47661 Issum (DE); Opheys, Michael, 41334 Nettetal (DE)

(57) **Zusammenfassung**

Es wird ein Verfahren zur Durchführung von Ultraschallscans an einem Untersuchungsobjekt (1) zur Verfügung gestellt, in dem nacheinander mittels eines Prüfkopfes (2) Ultraschallpulse in das Untersuchungsobjekt (1) zum Generieren von Pulsechos eingebracht, die Pulsechos detektiert und eine Bilddarstellung einer Schnittfläche (5) des Untersuchungsobjektes (1) erzeugt werden. Dabei werden erfindungsgemäß in einem ersten Schritt Benutzervorgaben (4) eingelesen, die einen ersten Teilbereich (6, 6-1, 6-2) und einen zweiten Teilbereich (7, 7-1, 7-2) der Schnittfläche (5) vorgeben. In einem nachfolgenden zweiten Schritt wird ein Ultraschallscan in dem ersten Teilbereich (6, 6-1, 6-2) mit einer ersten Auflösung und in dem zweiten Teilbereich (7, 7-1, 7-2) mit einer von der ersten Auflösung verschiedenen zweiten Auflösung durchgeführt.

## Beschreibung

Die vorliegende Erfindung betrifft ein Verfahren zur Durchführung von Ultraschallscans an einem Untersuchungsobjekt, in das nacheinander mittels eines Prüfkopfes Ultraschallpulse in das Untersuchungsobjekt zum Generieren von Pulsechos eingebracht werden.

Die zerstörungsfreie Prüfung von Werkstücken spielt eine wichtige Rolle bei der Qualitätssicherung und Wartung von aufwendig herzustellenden Produkten wie beispielsweise ein Rotor einer Dampfturbine. Der Herstellungsprozess für derartige Rotoren ist anspruchsvoll und aufwendig. Das Zerstören eines Werkstücks im Rahmen der Qualitätskontrolle ist daher nicht wünschenswert. Weiterhin ist es wünschenswert, jedes hergestellte Werkstück auf seine Qualität hin zu überprüfen, was eine zerstörungsfreie Prüfung erfordert. Aber auch im Rahmen der Wiederaufarbeitung von verschlissenen Werkstücken (refurbishment) kommen häufig zerstörungsfreie Prüfungsverfahren zum Einsatz, um die innere Integrität des Gefüges des Werkstücks überprüfen zu können, bevor darüber entschieden wird, ob ein Wiederaufarbeiten möglich ist oder nicht.

Als zerstörungsfreies Prüfungsverfahren für ein Werkstück kommt häufig die Ultraschallprüfung zur Anwendung. Bei dieser wird ein Ultraschallsignal in das Material des Untersuchungsobjektes eingeschallt und anhand der Abschwächung durch das Untersuchungsobjekt hindurch tretender Signale oder anhand der Intensität im Innern des Untersuchungsobjektes reflektierter Signale eine Aussage über das Gefüge im Inneren abgeleitet. Dabei werden Ultraschallpulse in zeitlich kurzen Abständen, die durch die sogenannte Puls-Folge-Frequenz bestimmt sind (PRF: puls recurrence frequency) in das Untersuchungsobjekt eingebracht. Defekte im Inneren des Untersuchungsobjektes, beispielsweise Risse, Kavitäten, etc. erzeugen Echos der Ultraschallpulse, aus denen auf die Lage und die Größe des Defekts zurück geschlossen werden kann. Aber auch in der Medizintechnik bieten sich vielfältige Anwendungen für die Ultraschalltechnik, beispielsweise in der pränatalen Diagnostik.

In der Phased-Array Ultraschalltechnologie werden in einem Prüfkopf mehrere Ultraschallelemente zusammengeschaltet, wobei die einzelnen Ultraschallelemente nach bestimmten sogenannten "Focal Laws", auch Sendemodulierungsfolgen genannt, zum Aussenden eines Ultraschallpulses aktiviert werden. Dabei können Form, Fokussierung und Richtung des resultierenden Ultraschallpulses durch die Zeitpunkte, zu denen die einzelnen Ultraschallelemente aktiviert werden, vorgegeben werden. Man spricht beispielsweise von einem Linienscan, wenn eines oder mehrere benachbarte Ultraschallelemente für einen Einzelpuls gleichzeitig aktiviert werden, wodurch sich ein senkrecht von dem Prüfkopf entfernender Ultraschallpuls ergibt, und mehrere solcher Einzelpulse mit nebeneinanderliegenden Pulsmittelpunkten in das Prüfobjekt eingebracht werden. Ultraschallpulse mit einem abweichenden Einschallwinkel können erzeugt werden, indem jedes der benachbarten Ultraschallelemente mit einem zeitlichen Versatz zu dem jeweils vorhergehenden Ultraschallelement aktiviert wird, wobei der zeitliche Versatz den Einschallwinkel des jeweiligen Ultraschallpulses und die Richtung der Aktivierung das Vorzeichen des Einschallwinkels bestimmen. Für einen Winkelscan, bei denen Ultraschallpulse unter verschiedenen Einschallwinkeln in das Untersuchungsobjekt eingebracht werden, um ein Ultraschallbild in der Form eines Kreissegmentes zu erhalten, können derart eine Reihe von Ultraschallpulsen in einem Winkelbereich von beispielsweise -40° bis +40° erzeugt werden. In ähnlicher Weise können auch fokussierte Ultraschallpulse erzeugt werden, also Ultraschallpulse, die in einem Fokalpunkt oder in einer Fokalfläche zusammenlaufen, wobei die Entfernung des Fokalpunktes oder der Fokalfläche vom Prüfkopf durch die Sendemodulierungsfolge eingestellt werden kann.

Als Ultraschallscan wird hier verallgemeinernd eine Reihe von Ultraschallpulsen bezeichnet, die mit unterschiedlichen Parametern von einer Mehrzahl von Einzelelementen erzeugt und deren Echos gegebenenfalls zu einem Einzelbild zusammengefasst werden. Ein Ultraschallscan kann also insbesondere ein Linienscan oder ein Winkelscan sein. Bei einem Ultraschallscan werden die einzelnen Ultraschallpulse wenigstens näherungsweise in einer Ebene in das Untersuchungsobjekt eingeschallt, so dass das Ultraschallecho der Ultraschallpulse eine Schnittfläche durch das Untersuchungsobjekt charakterisiert.

Bei vielen Anwendungsfällen besteht neben der Detektion von Ungänzen oder anatomischen Details die Anforderung, sich an vorhandenen Geometrien zu orientieren, um sicherzustellen, dass sich der Prüfkopf an der richtigen Position befindet und die Einschallrichtung korrekt gewählt ist. Solche Strukturen können im Fall der Untersuchung von Werkstücken Reflektionen an Kanten oder Radien sein, bei medizintechnischen Anwendungen beispielsweise Knochen, Implantate oder spezielle Gewebestrukturen. Problematisch ist, dass die bei Auswertung und Darstellung der in einem Ultraschallscan oder einer Serie von Ultraschallscans anfallenden Datenmengen hohe Anforderungen an die Hardware stellen. Um die Daten bearbeiten zu können, werden üblicherweise die Auflösung des Ultraschallscans oder -bildes sowie bei Bewegtbildern die Bildwiederholrate gesenkt. Dadurch können jedoch unter Umständen wichtige Details nicht mehr dargestellt werden.

Aufgabe der vorliegenden Erfindung ist es daher, eine Vorrichtung und ein Verfahren einzuführen, dass die bei einem Ultraschallscan anfallende Datenmenge reduziert, ohne die Untersuchungsgenauigkeit zu reduzieren.

Diese Aufgabe wird durch ein Verfahren zur Durchführung von Ultraschallscans nach Anspruch 1 und durch eine Vorrichtung nach Anspruch 9 gelöst. Die abhängigen Ansprüche enthalten die vorteilhaften Ausgestaltungen der Erfindung.

In dem erfindungsgemäßen Verfahren zur Durchführung von Ultraschallscans an einem Untersuchungsobjekt werden nacheinander mittels eines Prüfkopfes Ultraschallpulse in das Untersuchungsobjekt zum Generieren von Pulsechos eingebracht, die Pulsechos detektiert und eine Bilddarstellung einer Schnittfläche des Untersuchungsobjektes erzeugt. Dabei werden erfindungsgemäß in einem ersten Schritt Benutzervorgaben eingelesen, die einen ersten Teilbereich und einen zweiten Teilbereich der Schnittfläche vorgeben. In einem nachfolgenden zweiten Schritt wird ein Ultraschallscan in dem ersten Teilbereich mit einer ersten Auflösung und in dem zweiten Teilbereich mit einer von der ersten Auflösung verschiedenen zweiten Auflösung durchgeführt.

Das erfindungsgemäße Verfahren besitzt den Vorteil, dass ein Benutzer Teile der von dem Ultraschallscan erfassten Schnittfläche vorgeben kann, in der eine erste beziehungsweise zweite Auflösung verwendet werden. Dies erlaubt es dem Benutzer, für eine gegebene Prüfaufgabe unwichtige Bildbereiche mit einer niedrigen Auflösung zu erfassen, während die wesentlichen Bildbereiche mit einer höheren Auflösung abgetastet werden. Beispiele für Bildbereiche, in denen eine geringere Auflösung ausreichend ist, sind die obengenannten für die Orientierung verwendeten Strukturen, die zwar erfasst werden sollen, jedoch für die eigentliche Prüfaufgabe von untergeordnetem Interesse sind.

Dadurch kann die bei der Durchführung des Ultraschallscans anfallende Datenmenge vorteilhaft reduziert werden, was eine schnellere Durchführung oder im Falle von Bewegtbildern eine höhere Bildwiederholrate ermöglicht. Ebenso ist es möglich, die Auflösung in dem zu prüfenden Teilbereich des Ultraschallscans bei gegenüber dem Stand der Technik gleichbleibender Datenmenge zu erhöhen und die Untersuchungsgenauigkeit so zu verbessern. Diese Vorteile können verwirklicht werden, ohne den Überblick in dem bildgebenden Verfahren einzubüßen. Der Ultraschallscan kann beispielsweise ein Winkelscan sein. In diesem Fall können der erste und der zweite Teilbereich Winkelbereiche eines von dem Winkelscan überstrichenen Winkelbereiches sein.

Dabei kann ein Ausgewählter von erstem und zweitem Teilbereich ein zusammenhängender Winkelbereich des von dem Winkelscan überstrichenen Winkelbereiches und ein Verbleibender von erstem und zweitem Teilbereich der von dem Winkelscan überstrichene Winkelbereich abzüglich des zusammenhängenden Winkelbereiches sein. In einem solchen Fall genügt es, wenn die Benutzervorgaben nur den ausgewählten Teilbereich explizit vorgeben, weil der verbleibende Teilbereich implizit über den ausgewählten Teilbereich vorgegeben wird. Dadurch können die Benutzervorgaben und gegebenenfalls eine Benutzerschnittstelle, von der die Benutzervorgaben eingelesen werden, vereinfacht werden, was eine bessere Bedienbarkeit bedingt.

Der Ultraschallscan kann auch ein Linienscan sein. In diesem Fall können der erste und der zweite Teilbereich Abschnitte einer Basislinie des Linienscans sein. Als Basislinie wird hierbei die Strecke bezeichnet, auf der die Einzelelemente des Prüfkopfes angeordnet sind oder über die die Einzelelemente des Prüfkopfes während des Linienscans bewegt werden. Eine solche Basislinie können insbesondere eine gerade Linie oder ein Kreissegment sein.

Besonders bevorzugt werden die Benutzervorgaben von einer Benutzerschnittstelle eingelesen. Die Benutzerschnittstelle kann beispielsweise als Dreh- oder Schieberegler ausgebildet sein. Ebenso ist es vorstellbar, dass eine grafische Benutzeroberfläche, über die eine Bilddarstellung angezeigt werden kann, zusätzlich als Benutzerschnittstelle dient. Hierbei kann es möglich sein, einen Teilbereich eines mit einer niedrigen Auflösung aufgenommenen Ultraschallscans auszuwählen, woraufhin der ausgewählte Teilbereich des Ultraschallscans mit einer höheren Auflösung erfasst und dargestellt wird.

Die erste Auflösung kann höher als die zweite Auflösung sein. Hierfür wird bevorzugt die Schrittweite zwischen zwei aufeinanderfolgenden Ultraschallpulsen eines Linien- oder Winkelscans in dem ersten Teilbereich verringert und in dem zweiten Teilbereich vergrößert.

Zusätzlich können bei bevorzugten Ausführungsformen der Erfindung die Benutzervorgaben auch wenigstens eine von erster und zweiter Auflösung vorgeben. Indem der Benutzer über die Benutzervorgaben die erste und/oder die zweite Auflösung wählen kann, wird eine besonders hohe Flexibilität des Prüfverfahrens erreicht.

Bevorzugt werden bei dem Verfahren der Erfindung für jeden Ultraschallpuls die Zeitdauer vom Einschallen des Ultraschallpulses bis zum Empfang des oder der detektierten Pulsechos und die Intensität des oder der detektierten Pulsechos an eine Auswerteroutine weitergeleitet. Die Auswerteroutine generiert daraus die Bilddarstellung der Schnittfläche des Untersuchungsobjektes mit der ersten Auflösung im ersten Teilbereich und der zweiten Auflösung im zweiten Teilbereich.

Ein zweiter Aspekt der Erfindung führt eine Vorrichtung zur Durchführung von Ultraschallscans an einem Untersuchungsobjekt ein, die einen zum Einbringen von Ultraschallpulsen in das Untersuchungsobjekt ausgebildeten Prüfkopf und eine mit dem Prüfkopf verbundene Steuereinheit zum Vorgeben einer Sendemodulierungsfolge aufweist. Erfindungsgemäß ist dabei die Steuereinheit dazu ausgebildet, das erfindungsgemäße Verfahren auszuführen.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
- Figur 1: zeigt die Durchführung eines Ultraschallscans an einem Untersuchungsobjekt gemäß einem ersten Ausführungsbeispiel der Erfindung.
- Figur 2: illustriert ein zweites Ausführungsbeispiel der Erfindung.
- Figur 3: illustriert ein drittes Ausführungsbeispiel der Erfindung.
- Figur 4: illustriert ein viertes Ausführungsbeispiel der Erfindung.

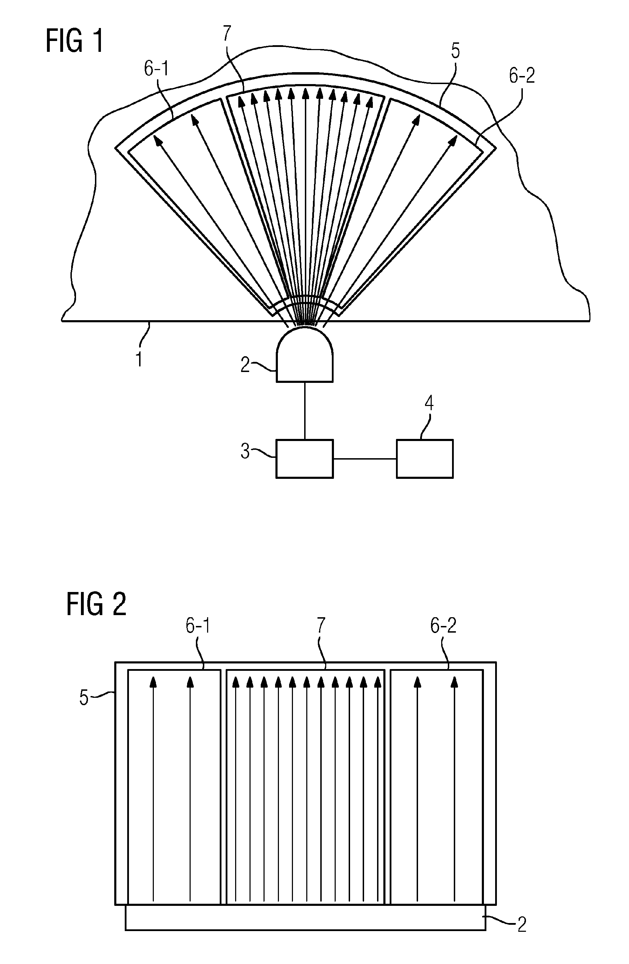

Figur 1 zeigt die Durchführung eines Ultraschallscans an einem Untersuchungsobjekt 1 gemäß einem ersten Ausführungsbeispiel der Erfindung. Dabei werden mit einem Prüfkopf 2 Ultraschallpulse in das Untersuchungsobjekt 1 eingebracht. Die Ultraschallpulse liegen dabei in einer Schnittfläche 5, die im Beispiel von Figur 1, die einen Winkelscan zeigt, wenigstens näherungsweise einem Kreissegment entspricht. Der Prüfkopf 2 wird dabei von einer Steuereinheit 3 gesteuert und liest Benutzervorgaben 4 ein, die Teilbereiche 6-1, 6-2 und 7 der Schnittfläche 5 definieren. Erfindungsgemäß ist eine Auflösung in den Teilbereichen unterschiedlich, um die bei einem Ultraschallscan anfallende Informationsmenge zu reduzieren.

Da über die Benutzervorgaben 4 diejenigen Teile des Ultraschallscans vorgegeben werden können, in denen eine niedrigere beziehungsweise höhere Auflösung zur Anwendung kommen soll, können die für die jeweilige Untersuchung relevanten Teile des Ultraschallscans mit hoher Auflösung und weniger wichtige Teile mit geringer Auflösung erfasst werden. Dementsprechend ist die Dichte von Ultraschallpulsen, die in den Figuren als Pfeile dargestellt werden, die Einschallort und Einschallrichtung anzeigen, in den Teilbereichen 6-1 und 6-2 gering und in dem Teilbereich 7 hoch. Die Auflösung ist proportional zur Dichte der Ultraschallpulse.

Figur 2 illustriert ein zweites Ausführungsbeispiel der Erfindung. Bei dem zweiten Ausführungsbeispiel handelt es sich um einen Linienscan, bei dem die Ultraschallpulse von verschiedenen Punkten einer entlang der Kontaktfläche des Prüfkopfes 2 mit dem Untersuchungsobjekt verlaufenden Basislinie mit gleichbleibendem Winkel zu der Basislinie in das Untersuchungsobjekt eingeschallt werden, wodurch sich eine typischerweise rechteckige Schnittfläche 5 ergibt. Auch im Beispiel der Figur 2 ist die Schnittfläche 5 in zwei Teilbereiche 6-1 und 6-2 mit geringer Auflösung und einen (zentralen) Teilbereich 7 mit hoher Auflösung aufgeteilt. Es können jedoch im Rahmen der Erfindung beliebige Zahlen größer Null von Teilbereichen der jeweiligen Auflösungen vorgesehen sein, deren Abgrenzungen und gegebenenfalls auch Auflösungen durch die Benutzervorgaben vorgegeben werden.

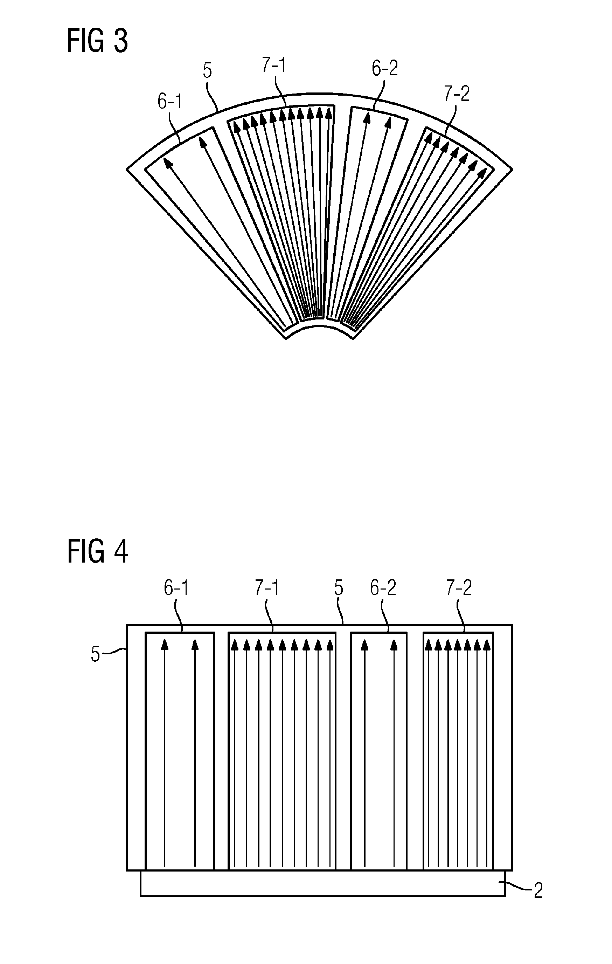

Figur 3 illustriert ein drittes Ausführungsbeispiel der Erfindung, wobei es sich wiederum um einen Winkelscan handelt. Im Unterschied zu den ersten beiden Ausführungsbeispielen sind jeweils zwei Teilbereiche 6-1 und 6-2 beziehungsweise 7-1 und 7-2 der Schnittfläche 5 für jede Auflösung vorgesehen.

Figur 4 illustriert ein viertes Ausführungsbeispiel der Erfindung, das einen Linienscan zeigt, aber im Wesentlichen dem dritten Ausführungsbeispiel von Figur 3 entspricht, so dass auch hier jeweils zwei Teilbereiche 6-1 und 6-2 beziehungsweise 7-1 und 7-2 der Schnittfläche 5 mit jeweiligen Auflösungen vorgesehen sind.

Die vorliegende Erfindung wurde unter Bezugnahme auf die Figuren anhand konkreter Ausführungsbeispiele beschrieben. Abwandlungen von diesen Ausführungsbeispielen sind jedoch möglich, ohne den Schutzbereich der Ansprüche zu verlassen.

## Patentansprüche

1. Ein Verfahren zur Durchführung von Ultraschallscans an einem Untersuchungsobjekt (1),
wobei nacheinander mittels eines Prüfkopfes (2) Ultraschallpulse in das Untersuchungsobjekt (1) zum Generieren von Pulsechos eingebracht, die Pulsechos detektiert und anhand der Pulsechos eine Bilddarstellung einer Schnittfläche (5) des Untersuchungsobjektes (3) erzeugt werden, **dadurch gekennzeichnet, dass**
in einem ersten Schritt Benutzervorgaben (4) eingelesen werden, die einen ersten Teilbereich (6, 6-1, 6-2) und einen zweiten Teilbereich (7, 7-1, 7-2) der Schnittfläche (5) vorgeben, und
in einem zweiten Schritt ein Ultraschallscan in dem ersten Teilbereich (6, 6-1, 6-2) mit einer ersten Auflösung und in dem zweiten Teilbereich (7, 7-1, 7-2) mit einer von der ersten Auflösung verschiedenen zweiten Auflösung durchgeführt wird.

2. Das Verfahren nach dem vorhergehenden Anspruch,
bei dem der Ultraschallscan ein Winkelscan ist und der erste und der zweite Teilbereich (6, 6-1, 6-2; 7, 7-1, 7-2) Winkelbereiche eines von dem Winkelscan überstrichenen Winkelbereiches sind.

3. Das Verfahren nach dem vorhergehenden Anspruch,
bei dem ein Ausgewählter von erstem und zweitem Teilbereich (6, 6-1, 6-2; 7, 7-1, 7-2) ein zusammenhängender Winkelbereich des von dem Winkelscan überstrichenen Winkelbereiches und ein Verbleibender von erstem und zweitem Teilbereich (6, 6-1, 6-2; 7, 7-1, 7-2) der von dem Winkelscan überstrichene Winkelbereich abzüglich des zusammenhängenden Winkelbereiches sind.

4. Das Verfahren nach Anspruch 1,
bei dem der Ultraschallscan ein Linienscan ist und der erste und der zweite Teilbereich (6, 6-1, 6-2; 7, 7-1, 7-2) Abschnitte einer Basislinie des Linienscans sind.

5. Das Verfahren nach einem der vorhergehenden Ansprüche, bei dem die Benutzervorgaben (4) von einer Benutzerschnittstelle eingelesen werden.

6. Das Verfahren nach einem der vorhergehenden Ansprüche, bei dem die erste Auflösung höher als die zweite Auflösung ist.

7. Das Verfahren nach einem der vorhergehenden Ansprüche, bei dem die Benutzervorgaben (4) wenigstens eine von erster und zweiter Auflösung vorgeben.

8. Das Verfahren nach einem der vorhergehenden Ansprüche, bei dem für jeden Ultraschallpuls die Zeitdauer vom Einschallen des Ultraschallpulses bis zum Empfang des oder der detektierten Pulsechos und die Intensität des oder der detektierten Pulsechos an eine Auswerteroutine weitergeleitet werden und die Auswerteroutine daraus die Bilddarstellung der Schnittfläche (5) des Untersuchungsobjektes (1) mit der ersten Auflösung im ersten Teilbereich (6, 6-1, 6-2) und der zweiten Auflösung im zweiten Teilbereich (7, 7-1, 7-2) generiert.

9. Eine Vorrichtung zur Durchführung von Ultraschallscans an einem Untersuchungsobjekt (1),
die einen zum Einbringen von Ultraschallpulsen in das Untersuchungsobjekt (1) ausgebildeten Prüfkopf (2) und eine mit dem Prüfkopf (2) verbundene Steuereinheit (3) zum Vorgeben einer Sendemodulierungsfolge aufweist,
**dadurch gekennzeichnet, dass**
die Steuereinheit (3) ausgebildet ist, das Verfahren von einem der vorhergehenden Ansprüche auszuführen.
